# EUROPÄISCHE PATENTSCHRIFT

(11) **EP 1 260 308 B1**
(45) Veröffentlichungstag und Bekanntmachung des Hinweises auf die Patenterteilung: **27.07.2005**
(21) Anmeldenummer: 01112648.9
(22) Anmeldetag: 25.05.2001
(51) Int. Cl.: B23Q 11/00, B23Q 11/08

(54) **Werkzeugmaschine mit Späne-Absaugung**
Machine tool with chip removal by suction
Machine-outil avec aspiration des copeaux

(43) Veröffentlichungstag der Anmeldung: 27.11.2002
(73) Patentinhaber: Cross Hüller GmbH, 71636 Ludwigsburg (DE)
(72) Erfinder: Stengele, Gerald, 71636 Ludwigsburg (DE); Gross, Jürgen, 71640 Ludwigsburg (DE); Welb, Sören, 74360 Ilsfeld (DE)
(74) Vertreter: Rau, Manfred, Dr. Dipl.-Ing.

(56) Entgegenhaltungen:
- WO-A-00/73017
- WO-A-00/76721
- DE-C- 19 500 215
- DE-C- 19 541 011
- DE-U- 8 903 065
- US-A- 3 837 383
- US-A- 4 200 417
- US-A- 6 036 412

## Beschreibung

Die Erfindung betrifft eine Werkzeugmaschine nach dem Oberbegriff des Anspruches 1.

Bei einer derartigen aus der DE 195 41 011 C1 bekannten Werkzeugmaschine ist eine kastenförmige Absaug-Haube verschiebbar auf der Werkzeug-Spindel angeordnet. Die Absaug-Haube weist an ihrem dem zu bearbeitenden Werkstück zugewandten Rand eine Ringkammer auf, in der sich ein Überdruckgaspolster befindet, sodass ein schmaler Spalt zwischen der Absaug-Haube und dem zu bearbeitenden Werkstück gebildet wird. Die Absaug-Haube selber liegt unter Schwerkraft mittels des Gaspolsters am Werkstück an. Der Innenraum der Absaug-Haube liegt an einer Unterdruckquelle an, sodass mit der Luft Späne abgesaugt werden. Auf der Werkzeug-Spindel sind Anschläge angebracht, die die Funktion von Endanschlägen haben, um ein Abziehen der Absaug-Haube von der vertikalen Werkzeug-Spindel zu vermeiden.

Bei einer aus der WO 00/73017 A1 bekannten Werkzeugmaschine liegt eine kastenförmige Absaug-Haube einerseits am Werkstück und andererseits an einer Platte an, die in Richtung der Spindel-Achse gegenüber der Maschine bewegbar ist und mit einer Andrückkraft gegen die Ansaughaube anliegt. Das Werkzeug und die Werkzeugspindel können innerhalb der Haube in der senkrecht zur Spindel-Achse liegenden Ebene bewegt werden. Die Absaug-Haube bleibt auch beim Werkzeugwechsel in einer Position vor dem Werkstück; die Werkzeugspindel samt Werkzeug wird aus der Absaug-Haube herausverfahren. Diese Ausgestaltung erfordert einen großen Konstruktionsaufwand für die Absaug-Haube.

Aus der WO 00/50199 A1 ist eine Werkzeugmaschine bekannt, die nur eine Bewegung des Werkzeugs in einer Richtung, nämlich in Richtung der Spindel-Achse zuläßt. Es ist eine das Werkzeug umgebende, teleskopartig ausgebildete Absaug-Haube vorgesehen, die beim Bearbeiten eines Werkstücks mittels eines Bohrers am Werkstück anliegt und beim Eindringen des Bohrers in das Werkstück gegen die Kraft einer Feder zur Werkzeugmaschine hin verschoben wird. Eine solche Ausgestaltung läßt eine dreidimensionale Bewegung des Werkzeugs gegenüber dem Werkstück nicht zu.

Aus der US 5,108,236 A ist eine Bohrmaschine zum Bohren von Leiterplatten bekannt, die eine Werkzeugspindel aufweist, die in einem Spindel-Sattel gehalten ist, der wiederum mittels eines Spindel-Triebs in Richtung der Spindel-Achse verstellbar ist. Auf der dem Werkstück zugewandten Seite der Werkzeugspindel ist ein die Werkzeugspindel topfartig umgebender Drückerfuß angebracht, mittels dessen beim Bohren die Leiterplatte auf ihre Unterlage gedrückt wird. Das Andrücken erfolgt mittels am Spindel-Sattel abgestützten Druckluftzylindern, die den Drückerfuß mit einer dem Druck der Druckluft entsprechenden Kraft auf die Unterlage drücken bzw. den Drückerfuß zurückziehen. Der weitgehend geschlossene Drückerfuß, der nur eine Öffnung zum Durchtritt des Bohrers aufweist, ist gleichzeitig mit einer Späne-Absaugung versehen. Für eine dreidimensionale Bewegung zwischen Werkstück und Werkzeug ist auch diese Ausgestaltung nicht geeignet.

Der Erfindung liegt die Aufgabe zugrunde, eine Werkzeugmaschine der gattungsgemäßen Art mit einfachen Maßnahmen derart auszugestalten, daß eine zuverlässige Späne-Absaugung auch bei dreidimensionalen Bewegungen zwischen Werkzeug und Werkstück möglich sind, und daß andererseits die Werkzeug-Aufnahme zum Werkzeug-Wechsel frei zugänglich ist.

Diese Aufgabe wird erfindungsgemäß durch die Merkmale des Anspruches 1 gelöst. Dadurch, daß die Absaughaube einerseits in der Ebene quer zur Spindel-Achse fest mit der Werkzeugspindel gekoppelt ist, muß sie in ihrer Ausdehnung quer zur Spindel-Achse nur der Größe des größtmöglichen einzusetzenden Werkzeugs angepaßt werden. Dadurch, daß stets ein kleiner Spalt zwischen der Absaug-Haube und dem zu bearbeitenden Werkzeug freigehalten wird, ist eine ungestörte Bewegung zwischen der Absaug-Haube und dem Werkstück in der Ebene quer zur Spindel-Achse möglich. Schließlich kann die Absaug-Haube so weit zurückgezogen werden, daß die Werkzeug-Aufnahme der Werkzeugspindel für einen automatischen Werkstück-Wechsel frei zugänglich ist.

Weitere vorteilhafte und z.T. erfinderische Ausgestaltungen ergeben sich aus den Unteransprüchen.

Weitere Merkmale, Vorteile und Einzelheiten der Erfindung ergeben sich aus der nachfolgenden Beschreibung zweier Ausführungsbeispiele der Erfindung anhand der Zeichnung. Es zeigt
- Fig. 1: eine Werkzeugmaschine in Vorderansicht,
- Fig. 2: eine Schnitt-Darstellung der Werkzeugmaschine entsprechend der Schnittlinie II-II in Fig. 4 mit ausgefahrener Absaug-Haube,
- Fig. 3: eine Schnitt-Darstellung der Werkzeugmaschine entsprechend der Schnittlinie II-II in Fig. 4 mit zurückgezogener Absaug-Haube,
- Fig. 4: eine Stirnansicht auf die Absaug-Haube mit Werkzeug und
- Fig. 5: eine Darstellung entsprechend Fig. 2 und 3 mit einem gegenüber Fig. 2 und 3 abgewandelten Verschiebe-Antrieb für die Absaug-Haube.

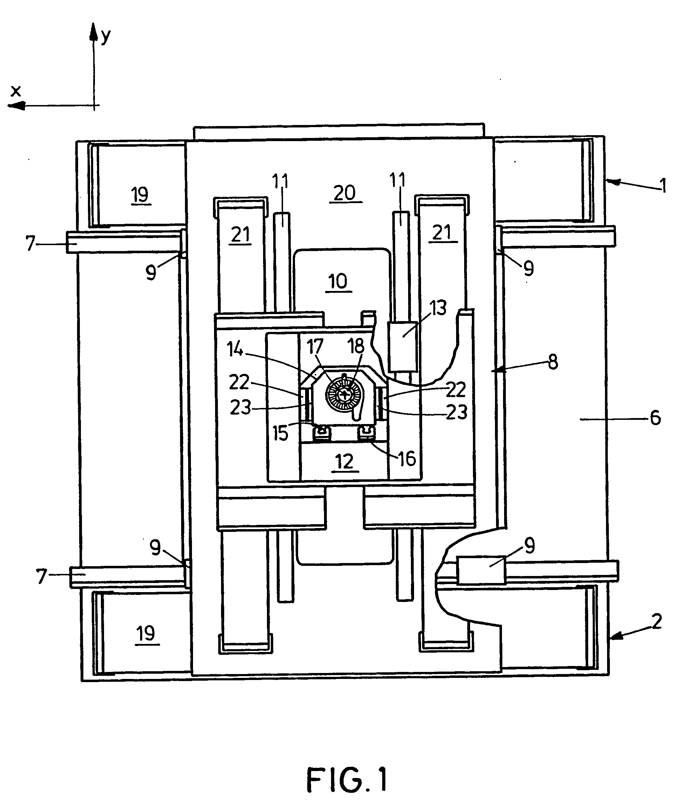

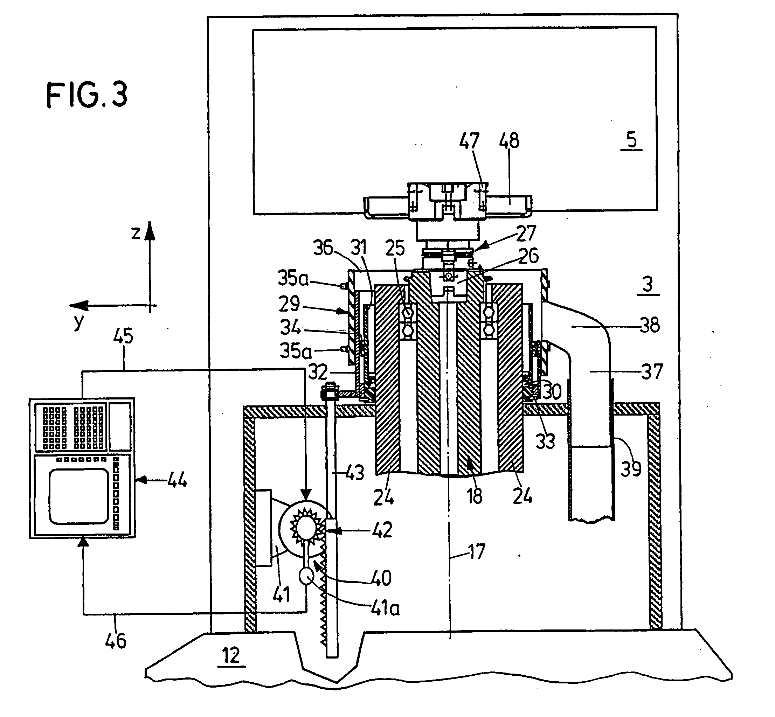

Wie insbesondere Fig. 1 entnehmbar ist, weist die in der Zeichnung dargestellte Werkzeugmaschine einen - in der horizontalen z-Richtung gesehen - etwa quadratischen, durch einen Rahmen 1 gebildeten Ständer 2 auf. Der Ständer 2 ist auf einem Grundgestell 3 abgestützt. Auf der Arbeitsseite 4 ist auf dem Grundgestell 3 ein Werkstückträger 5 abgestützt, der in z-Richtung in üblicher Weise verschiebbar sein kann.

An der der Arbeitsseite 4 zugewandten Stirnseite 6 sind in einer vertikalen x-y-Ebene und sich in horizontaler x-Richtung erstreckend jeweils parallel zueinander angeordnete x-Führungsschienen 7 angebracht. Auf diesen x-Führungsschienen 7 ist ein horizontal in x-Richtung verschiebbarer x-Schlitten 8 mit Führungsschuhen 9 gelagert. Der x-Schlitten 8 ist ebenfalls rahmenartig ausgebildet und weist eine sich im wesentlichen vertikal in y-Richtung erstreckende, in z-Richtung offene Durchgangsöffnung 10 auf. An seiner der Arbeitsseite 4 zugewandten Vorderseite sind beiderseits der Durchgangsöffnung 10 zueinander parallele, sich in y-Richtung erstrekkende y-Führungsschienen 11 angebracht, auf denen ein y-Schlitten 12 mittels Führungsschuhen 13 vertikal, also in y-Richtung, gelagert ist. Im rahmenartigen und in z-Richtung durchgehend offenen y-Schlitten 12 ist ein z-Schlitten auf einem Paar parallel zueinander angeordneter, sich in z-Richtung erstreckender z-Führungsschienen 15 verschiebbar gelagert, und zwar mittels am y-Schlitten 12 angebrachter Führungsschuhe 16. Der z-Schlitten 14 trägt eine um eine in z-Richtung verlaufende Spindel-Achse 17 drehantreibbare Werkzeugspindel 18. Der Antrieb der Schlitten 8, 12, 14 erfolgt mittels Linear-Motoren, die beispielsweise wie in der EP-Anmeldung 01 105 919.3 dargestellt und beschrieben ist, ausgestaltet sind. Von den Linear-Motoren zum Antrieb des x-Schlittens 8 sind in Fig. 1 Permanentmagnet-Anordnungen 19 als Sekundär-Teil der Linear-Motoren dargestellt, die sich über den vollen Arbeitsweg des x-Schlittens 8 erstrekken und an der Stirnseite 6 des Ständers 2 angebracht sind. Die zugeordneten Primär-Teile, bei denen es sich um Stator-Spulen handelt, sind an der den Permanentmagnet-Anordnungen 19 zugewandten Seiten des x-Schlittens 8 angebracht und in der Zeichnung nicht erkennbar.

An der dem y-Schlitten 12 zugewandten Stirnseite 20 des x-Schlittens 8 sind beiderseits der y-Führungsschienen 11 und parallel zueinander die durch Permanentmagnet-Anordnungen 21 gebildeten Sekundär-Teile der Linear-Motoren zum Antrieb des y-Schlittens 12 angebracht. Die ihnen zugeordneten, durch Stator-Spulen gebildeten Primär-Teile sind an der zugewandten Seite des y-Schlittens 12 angebracht und in der Zeichnung nicht erkennbar.

Auch für den Antrieb des z-Schlittens 14 in z-Richtung sind Linear-Motoren vorgesehen, die durch am y-Schlitten 12 angebrachte Permanentmagnet-Anordnungen 22 als Sekundär-Teile und durch zugeordnete, am z-Schlitten 14 angebrachte, als Primär-Teile dienende Stator-Spulen 23 gebildet sind. Grundsätzlich kann auch die Werkzeugspindel 18 in z-Richtung unverschiebbar und anstelle dessen der Werkstückträger 5 in z-Richtung verschiebbar sein. Entscheidend ist, daß Werkzeugspindel 18 und Werkstückträger 5 in z-Richtung relativ zueinander verschiebbar sind.

Soweit die Werkzeugmaschine bis hierher dargestellt und beschrieben ist, ist sie bekannt, beispielsweise aus der bereits erwähnten EP-Anmeldung 01 105 919.3.

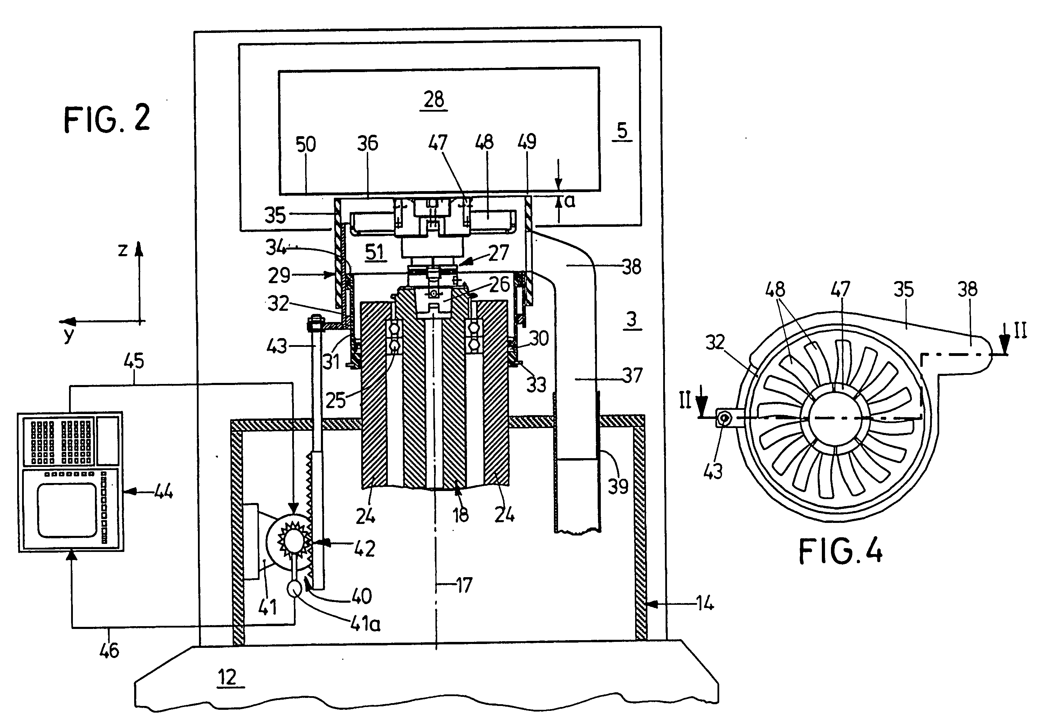

Wie den Fig. 2 und 3 entnehmbar ist, ist die Werkzeugspindel 18 in einem fest mit dem z-Schlitten 14 verbundenen Tragrohr 24 mittels Wälzlagern 25 um die Spindel-Achse 17 drehbar gelagert. An dem der Arbeitsseite 4 zugewandten Ende der Werkzeugspindel 18 ist eine Werkzeug-Aufnahme 26 zur Aufnahme eines Werkzeuges 27 angebracht, mittels dessen ein auf dem Werkstückträger 5 angebrachtes Werkstück 28 bearbeitet werden soll.

Auf dem Tragrohr 24 ist eine teleskopartig ausgebildete kreiszylindrische Absaug-Haube 29 für Späne angebracht, die bei der Bearbeitung des Werkstücks 28 mit dem Werkzeug 27 anfallen. Diese Haube 29 weist ein mittels eines Lagers 30 auf dem Tragrohr 24 verschiebbar abgestütztes Innen-Rohr 31 und ein auf diesem in Richtung der Spindel-Achse 17 verschiebbar geführtes Außen-Rohr 32 auf. Die Verschiebbarkeit des Außen-Rohrs 32 auf dem Innen-Rohr 31 ist durch Anschläge 33, 34 begrenzt. Auf dem Außen-Rohr 32 ist ein über dieses zum Werkstück 28 hin vorragendes Schutzrohr 35 angebracht, das auswechselbar ist und als Verschleißteil dient. Um das Schutzrohr 35 leicht auswechseln zu können, ist es mittels nur in Fig. 3 dargestellter Klemmeinrichtungen 35a auf dem Außenrohr 32 befestigt. Die Haube 29, d.h. das Schutzrohr 35, weist auf der dem Werkstück 28 zugewandten Seite eine sich über ihren vollen Querschnitt erstreckende Öffnung 36 auf. An das Außen-Rohr 32 ist ein Absaug-Rohr 37 mittels eines Krümmers 38 angeschlossen. Das Absaug-Rohr 37 weist zum z-Schlitten 14 eine Schiebe-Muffe 39 auf, so daß es Verschiebe-Bewegungen des Außen-Rohrs 32 in z-Richtung folgen kann.

Das Außen-Rohr 32 ist mittels eines als Linearantrieb ausgebildeten Verschiebe-Antriebs 40 gegenüber der Werkzeug-Spindel 18 in z-Richtung verschiebbar. Beim Ausführungsbeispiel nach Fig. 2 und 3 besteht er aus einem ansteuerbaren Elektro-Motor 41 mit einer integrierten Meßeinrichtung 41a, beispielsweise einem üblichen Impulsgeber, und einer von diesem über einen Zahnrad-Zahnstangen-Trieb 42 antreibbaren Schubstange 43, die in z-Richtung verläuft und am Außen-Rohr 32 befestigt ist. Der Motor 41 ist im z-Schlitten 14 angebracht. Er wird von der zentralen programmierbaren Steuerung 44 der Werkzeugmaschine angesteuert. Die Ansteuerung erfolgt über eine Steuerleitung 45. Außerdem ist eine Rückmelde-Leitung 46 für die Signale der Meßeinrichtung 41a vorgesehen. Die Wirkungsweise ist wie folgt:

Für ein bestimmtes Werkzeug 27, bei dem es sich im dargestellten Fall um einen Stirnfräser 47 mit propellerartigen Lüfterflügeln 48 handelt, und den auszuführenden Fräsvorgang am Werkstück 28 sind die erforderlichen Daten in der Steuerung 44 abgelegt. Zusätzlich ist hierfür die Weite a des Spaltes 49 zwischen der Absaug-Haube 29 und der zu bearbeitenden Fläche abgelegt, wobei es sich um die in Fig. 2 dargestellte Weite a des Spaltes 49 handelt, wenn das Werkzeug 27 im Eingriff mit dem zu bearbeitenden Werkstück 28 ist. In jedem Fall liegt die Absaug-Haube 29 in ihrer ausgefahrenen Arbeits-Position nicht am Werkstück 28 an, sondern es ist ein Spalt 49 von wenigen Millimetern vorgesehen.

Während eines Bearbeitungsvorgangs, während dessen mittels des Werkzeugs 27 das Werkstück 28 bearbeitet wird, befindet sich die Haube 29 in der in Fig. 2 dargestellten ausgefahrenen Arbeits-Position. Das Absaug-Rohr 37 ist an eine nicht dargestellte Absaug-Pumpe angeschlossen, die Luft durch den Spalt 49 zwischen der dem Werkzeug 27 zugewandten Fläche 50 des Werkstücks 28 und dem Schutzrohr 35 in den Innenraum 51 der Absaug-Haube 29 saugt. Die bei der Bearbeitung anfallenden Späne werden von dem in das Absaug-Rohr 37 gerichteten Luftstrom mitgenommen, wobei die Förderbewegung durch die Lüfterflügel 48 am Werkzeug 27 unterstützt wird. Die anfallenden Späne werden nach außen zum Absaug-Rohr 37 geschleudert.

Wenn nach Beendigung eines Bearbeitungsvorgangs das Werkzeug 27 ausgewechselt werden soll, und zwar insbesondere, wenn es automatisch durch eine Werkzeug-Wechsel-Vorrichtung ausgetauscht werden soll, wird das Außen-Rohr 32 mit Schutzrohr 35 mittels des Verschiebe-Antriebs so weit in die in Fig. 3 dargestellte Werkzeugwechsel-Position zurückverfahren, daß die Werkzeug-Aufnahme 26 für eine solche Werkzeug-Wechsel-Vorrichtung frei zugänglich ist. Auch hierfür sind die Daten in der Steuerung 44 abgelegt. Bei dieser Verschiebe-Bewegung des Außen-Rohrs 32 wird das Absaug-Rohr 37 in die Schiebe-Muffe 39 eingeschoben.

Wenn es sich bei dem einzusetzenden Werkzeug 27 um einen Bohrer handelt, dann muß die Absaughaube 29 während des Eindringens des Bohrers in das Werkstück 28 entsprechend dem relativen Vorschub des Bohrers zurückgezogen werden. Auch diese Daten sind in der Steuerung 44 abgelegt.

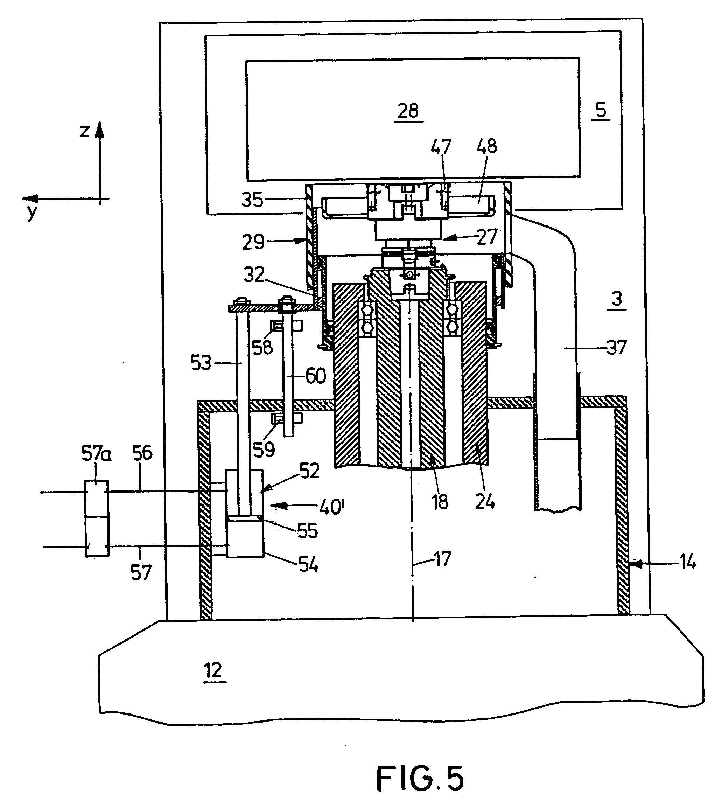

Die Ausgestaltung nach Fig. 5 unterscheidet sich von der nach Fig. 2 und 3 nur durch den Verschiebe-Antrieb 40'. In diesem Fall ist der ebenfalls als Linear-Antrieb ausgebildete Verschiebe-Antrieb 40' durch einen doppelseitig fluidisch beaufschlagbaren Kolben-Zylinder-Antrieb 52 gebildet, dessen Kolbenstange 53 mit dem Außen-Rohr 32 verbunden ist. Der Zylinder 54 ist beiderseits des Kolbens 55 an Fluidleitungen 56, 57 angeschlossen, die über ein Steuerventil 57a mit einer nicht dargestellten Druck-FluidQuelle verbunden sind.

Die Position der Absaug-Haube 29 in der Arbeits-Position unmittelbar vor dem Werkstück 28 einerseits und in der zum Werkzeug-Wechsel zurückgefahrenen Werkzeugwechsel-Position wird durch Anschläge 58, 59 begrenzt, die verstellbar und feststellbar auf einer parallel zur Spindel-Achse 17 verlaufenden Führungsstange 60 angebracht sind, und zwar der Anschlag 59 für die Arbeits-Position und der Anschlag 58 für die Werkzeugwechsel-Position. Diese ist einerseits mit dem Außen-Rohr 32 verbunden und im z-Schlitten 14 geführt, gegen den die Anschläge 58, 59 jeweils in einer ihrer beiden geschilderten Positionen zur Anlage kommen. Hierbei wird also die Position der Absaug-Haube 29 jeweils von Hand für einen bestimmten Bearbeitungsvorgang eingestellt.

## Patentansprüche

1. Werkzeugmaschine,
- mit einer um eine Spindel-Achse (17) drehbaren Werkzeug-Spindel (18),
-- die an einem Ende eine Werkzeug-Aufnahme (26) zur Befestigung eines Werkzeugs (27) aufweist, und
-- die in einem Tragrohr (24) drehbar gelagert ist,
- mit einem Werkstückträger (5) zur Aufnahme eines mittels des Werkzeugs (27) zu bearbeitenden Werkstücks (28),
- mit einem Antrieb (22, 23) zur Verschiebung des Werkstückträgers (5) und der Werkzeug-Spindel (18) relativ zueinander in Richtung der Werkzeug-Spindel (18),
- mit einer Einrichtung zur Verschiebung des Werkzeugs (27) und des Werkstücks (28) relativ zueinander in mindestens einer Richtung quer zur Spindel-Achse (17),
- mit einer Absaug-Haube (29),
-- die das Werkzeug (27) umgibt und
-- die relativ zur Werkzeug-Spindel (18) in Richtung der Spindel-Achse (17) auf dem Tragrohr (24) in eine ausgefahrene Arbeits-Position verschiebbar angeordnet ist und
- mit Mitteln zur Erzeugung eines Spalts (49) zwischen der Absaug-Haube (29) und dem Werkstück (28) in der Arbeits-Position der Absaug-Haube (29),
**dadurch gekennzeichnet,**
**dass** zur Verschiebung der Absaug-Haube (29) ein Verschiebe-Antrieb (40, 40') vorgesehen ist und
**dass** die Mittel zur Erzeugung eines Spalts (49) als mittel zur Einstellung des Spalts (49) in der Arbeits-Position und/oder zum Ansteuern der Werkzeugwechsel-Position durch eine Steuerung (44) des Verschiebe-Antriebs (40) oder durch einstellbare Anschläge (58, 59) gebildet sind.

2. Werkzeugmaschine nach Anspruch 1, **dadurch gekennzeichnet, dass** die Absaug-Haube (29) in eine zurückgefahrene Werkzeugwechsel-Position verschiebbar ist.

3. Werkzeugmaschine nach Anspruch 1, **dadurch gekennzeichnet, dass** der Verschiebe-Antrieb (40, 40') als Linear-Antrieb ausgebildet ist.

4. Werkzeugmaschine nach Anspruch 3, **dadurch gekennzeichnet, dass** der Linear-Antrieb (40) durch einen Elektro-Motor (41) mit einer Schubstange (43) gebildet ist.

5. Werkzeugmaschine nach Anspruch 3, **dadurch gekennzeichnet, dass** der Linear-Antrieb (40') als fluidisch beaufschlagbarer Kolben-Zylinder-Antrieb (52) ausgebildet ist.

6. Werkzeugmaschine nach Anspruch 1, **dadurch gekennzeichnet, dass** die Absaug-Haube (29) teleskopartig mit einem auf einem Innen-Rohr (31) verschiebbaren Außen-Rohr (32) ausgebildet ist.

7. Werkzeugmaschine nach Anspruch 1, **dadurch gekennzeichnet, dass** die Absaug-Haube (29) mit einem auswechselbaren Schutzrohr (35) versehen ist.

8. Werkzeugmaschine nach Anspruch 1, **dadurch gekennzeichnet, dass** die Absaug-Haube (29) mit einem in Richtung der Spindel-Achse (17) verschiebbaren Absaug-Rohr (37) versehen ist.

9. Werkzeugmaschine nach Anspruch 1, **dadurch gekennzeichnet, dass** die Absaug-Haube (29) einen Kreisquerschnitt aufweist und an ihrem dem Werkstückträger (5) zugewandten Ende eine sich über den vollen Querschnitt erstreckende Öffnung (36) aufweist.

10. Werkzeugmaschine nach Anspruch 1, **dadurch gekennzeichnet, dass** das Werkzeug (27) mit Lüfterflügeln (48) versehen ist.

11. Werkzeugmaschine nach Anspruch 1, **dadurch gekennzeichnet, dass** die Spindel-Achse (17) horizontal angeordnet ist.

## Claims

1. A machine tool, comprising
- a spindle (18) which is rotatable about a spindle axis (17), and
-- which, at one end, has a tool holding fixture (26) for a tool (27) to be fastened, and
-- which is rotatably supported in a stay pipe (24);
- a work carrier (5) for accommodation of a work (28) which is to be machined by the tool (27);
- a drive (22, 23) for displacement of the work carrier (5) and the spindle (18) one relative to the other in the direction of the spindle (18);
- a device for displacement of the tool (27) and the work (28) one relative to the other in at least one direction crosswise of the spindle axis (17);
- a suction hood (29),
-- which surrounds the tool (27), and
-- which is disposed for displacement relative to the spindle (18) in the direction of the spindle axis (17) on the stay pipe (24) into an extracted position of working; and
- means for producing a gap (49) between the suction hood (29) and the work (28) in the position of working of the suction hood (29);
**characterized**
**in that** a displacement drive (40, 40') is provided for displacement of the suction hood (29); and
**in that** the means for producing a gap (49) are means for setting the gap (49) in the position of working and/or for triggering the tool change position by a control system (44) of the displacement drive (40), or adjustable stops (58, 59).

2. A machine tool according to claim 1, **characterized**
**in that** the suction hood (29) is movable into a retracted tool change position.

3. A machine tool according to claim 1, **characterized**
**in that** the displacement drive (40, 40') is a linear drive.

4. A machine tool according to claim 3, **characterized**
**in that** the linear drive (40) is an electric motor (41) with a connecting rod (43).

5. A machine tool according to claim 3, **characterized**
**in that** the linear drive (40') is a fluidically operable piston-cylinder drive (52).

6. A machine tool according to claim 1, **characterized**
**in that** the suction hood (29) is telescopic, having an exterior pipe (32) which is movable on an interior pipe (31).

7. A machine tool according to claim 1, **characterized**
**in that** the suction hood (29) is provided with a replaceable protecting pipe (35).

8. A machine tool according to claim 1, **characterized**
**in that** the suction hood (29) is provided with a suction pipe (37) which is displaceable in the direction of the spindle axis (17).

9. A machine tool according to claim 1, **characterized**
**in that** the suction hood (29) has a circular cross section and, at its end turned towards the work carrier (5), has an opening (36) which extends over the full cross section.

10. A machine tool according to claim 1, **characterized**
**in that** the tool (27) is provided with fan blades (48).

11. A machine tool according to claim 1, **characterized**
**in that** the spindle axis (17) is disposed horizontally.

## Revendications

1. Machine-outil,
- avec une broche d'outil (18) rotative autour d'un axe de broche (17),
-- qui comporte un logement d'outil (26) à une extrémité pour la fixation d'un outil (27), et
-- qui est logée en rotation dans un tube support (24),
- avec un dispositif porte-pièce (5) pour le logement d'une pièce (28) à usiner à l'aide de l'outil (27);
- avec un entraînement (22, 23) pour le déplacement du dispositif porte-pièce (5) et de la broche d'outil (18) l'un par rapport à l'autre dans la direction de la broche d'outil (18),
- avec un dispositif pour le déplacement de l'outil (27) et de la pièce (28) l'un par rapport à l'autre dans au moins une direction perpendiculaire à l'axe de broche (17),
- avec une hotte d'aspiration (29),
-- qui entoure l'outil (27) et
-- qui est placée de manière mobile sur le tube support (24) dans une position de travail sortie par rapport à la broche d'outil (18) dans la direction de l'axe de broche (17) et
- avec des moyens pour créer une fente (49) entre la hotte d'aspiration (29) et la pièce (28) dans la position de travail de la hotte d'aspiration (29),
**caractérisée**
**en ce qu'**il est prévu un entraînement de déplacement (40, 40') pour le déplacement de la hotte d'aspiration (29) et
**en ce que** les moyens pour créer une fente (49) sont formés comme des moyens pour le réglage de la fente (49) dans la position de travail et/ou pour la commande de la position de changement d'outil par l'intermédiaire d'une commande (44) de l'entraînement de déplacement (40) ou au moyen de butées réglables (58, 59).

2. Machine-outil selon la revendication 1, **caractérisée en ce que** la hotte d'aspiration (29) est déplaçable dans une position de changement d'outil rentrée.

3. Machine-outil selon la revendication 1, **caractérisée en ce que** l'entraînement de déplacement (40, 40') est formé comme un entraînement linéaire.

4. Machine-outil selon la revendication 3, **caractérisée en ce que** l'entraînement linéaire (40) est formé par un moteur électrique (41) avec une bielle (43).

5. Machine-outil selon la revendication 3, **caractérisée en ce que** l'entraînement linéaire (40') est configuré comme un entraînement à piston-cylindre (52) alimenté par un fluide.

6. Machine-outil selon la revendication 1, **caractérisée en ce que** la hotte d'aspiration (29) est configurée à la manière d'un télescope avec un tube extérieur (32) coulissant sur un tube intérieur (31).

7. Machine-outil selon la revendication 1, **caractérisée en ce que** la hotte d'aspiration (29) est munie d'un tube de protection remplaçable (35).

8. Machine-outil selon la revendication 1, **caractérisée en ce que** la hotte d'aspiration (29) est munie d'un tube d'aspiration (37) déplaçable dans la direction de l'axe de broche (17).

9. Machine-outil selon la revendication 1, **caractérisée en ce que** la hotte d'aspiration (29) présente une section transversale circulaire et comporte à son extrémité dirigée vers le dispositif porte-pièce (5) une ouverture (36) s'étendant sur toute la section transversale.

10. Machine-outil selon la revendication 1, **caractérisée en ce que** l'outil (27) est muni d'ailettes de ventilateur (48).

11. Machine-outil selon la revendication 1, **caractérisée en ce que** l'axe de broche (17) est disposé horizontalement.
